# EUROPEAN PATENT APPLICATION

(11) **EP 1 185 121 A2**
(43) Date of publication of application: **06.03.2002**
(21) Application number: 01120186.0
(22) Date of filing: 22.08.2001
(51) Int. Cl.: H04Q 7/32, G06F 17/30, H04L 29/06

(54) **Information communication apparatus, information communication method, and recording medium for recording the information communication method**

(30) Priority: 01.09.2000 JP 2000265733
(71) Applicant: MATSUSHITA ELECTRIC INDUSTRIAL CO., LTD., Kadoma-shi, Osaka 571-0050 (JP)
(72) Inventor: Shibata, Akio, Konosu-shi, Saitama 365-0054 (JP); Okada, Noritake, Yokohama-shi, Kanagawa 226-0006 (JP)
(74) Representative: Grünecker, Kinkeldey, Stockmair & Schwanhäusser Anwaltssozietät

(57) **Abstract**

In the case that provided information which is owned by an information providing apparatus connected via a network is specified by designating address information so as to acquire the provided information, an address managing unit (125) stores/manages address information (205) in combination with an identification flag (201) and an identification number (203); an address selecting unit (123) selects one address information based upon the identification flag (201) and the identification number (203) instructed via the input unit (111) by a user; and an information acquiring unit (121) acquires the provided information via the network, which is specified based upon the selected address information .

## Description

### Background of the Invention

The present invention is related to an information communication apparatus and an information communication method, for specifying provided information which is owned by an information providing apparatus connected via a network by designating address information so as to acquire the provided information, and also related to a recordingmedium for recording thereon a program used to execute this information communication method. More particularly, the present invention is directed to an information communication apparatus and an information communication method, capable of acquiring desirable provided information by performing operations as few times as possible, and also directed to a recording medium for recording a program of this information communication method.

Recently, while contents providing services are commenced, portable telephones are developed not only as means for simply performing voice communications, but also as portable information terminals capable of performing data communications, e.g., viewing home pages and the like in the Internet. In other words, while browsing software (browsers) is installed on a portable information terminal, this portable information terminal corresponds to a communication system in which contents (namely, provided information) exclusively designed for a portable device are prepared, and are stored into a WWW (World Wide Web) server of the Internet, or a server exclusively used on a portable telephone network so as to be operated. Concretely speaking, when a user accesses an exclusively used home page, an index of information services is displayed on a display of such a portable information terminal. When the user selects desirable information from this information service index, the contents which are distributed to the WWW server, or the exclusively used server may be received and displayed.

A concrete structure of a contents providing service system is defined as follows: that is, a portable information terminal is connected via a base station to a mobile communication network. On the other hand, when contents directed to a portable device are stored on, for example, the Internet, this portable information terminal is connected via a WWW server and an access server to the mobile communication network.

In such a contents providing service system, in the case that a provision of contents (provided information) such as a home page is received from a portable information terminal, address information which is allocated to such contents to be accepted is entered via a keyboard and like of this portable information terminal, and this entered address information is included in a contents provision request, and then, the resulting request is transmitted. This address information corresponds to such information used to indicate a storage location where the contents are stored on the Internet. This address information is constituted by multiple characters which are described in the URL (Universal Resource Locator) format.

As a consequence, when the provision of the contents is accepted, and address information made of the URL format corresponding to such multiple character information is entered. Every time the provision of such contents is requested, the address information must be entered by manipulating the keyboard, which may become very cumbersome. Therefore, another portable information terminal has been proposed on which a so-called "book mark" function is installed. This "book mark" function is operated as follows: That is, URL-formatted address information of contents having such probabilities that information provisions are repeatedly accepted is registered into a memory employed in this portable information terminal when the provision of the relevant contents is accepted.

In other words, if the address information of the contents is registered in the memory by employing the book mark function, in such a case that the provision of the contents registered in this memory is requested at the next time, then the provision of the desirable contents may be accepted without entering the URL-formatted address information by using the keyboard, for example, since the address information of the contents registered in the memory is displayed in the list table on the display screen of the display unit of the portable information terminal.

However, in the above-explained conventional information communication apparatus, the address information of the contents which are registered in the memory of the portable information terminal by employing the book mark function is stored into this memory in accordance with the storage order. As a result, when a total number of the address information registered in the memory becomes larger, there is such a risk that lengthy time would be requested so as to retrieve the desirable address information.

To avoid such a risk, Japanese Patent Application No. Hei. 11-120109 has proposed such an "information communication apparatus" that the address information of the provided information having such a possibility that the provision of the information is repeatedly requested is sorted, and then, the sorted address information is indicated as the list table under scrollable condition.

However, even in such a conventional information communication apparatus, in order that a user selects an address of a page of desirable contents, this user is required to perform a series of various process operations, for instance, a list of address information is displayed, this address information list is scrolled, and then a desirable address is selected to be defined. Practically speaking, this process operation series actually should require relatively large numbers of various operations. Also, in the conventional information communication apparatus, when the address information of the contents is managed, this address information management does not cover a sort of addresses. The process operation after the address information has been executed is carried out in such a manner that only a home page is accessed irrespective of such an address sort.

### Summary of the Invention

The present invention has been made to solve the above-described drawbacks and problems, and therefore, has an object to provide such an information communication apparatus, and an information communication method, capable of acquiring desirable contents (provided information) while reducing a total number of process operations as to such an information communication apparatus in which the provided information owned by an information providing apparatus connected via a network is specified to be acquired by designating address information, and also has an object to provide a recording medium for recording thereon a computer program capable of realizing such an information communication method.

To achieve the above-explained object, an information communication apparatus, according to first aspect of the present invention, is featured by such an information communication apparatus for specifying provided information which is owned by an information providing apparatus connected via a network by designating address information to thereby acquire the specified provided information, comprising:
address managing unit for storing/managing the address information in combination with an identification number; input unit for accepting an instruction issued from a user; address selecting unit for selecting one address information based upon an identification number instructed via the input unit; and information acquiring unit for acquiring the provided information via the network, which is specified based upon the address information selected by the address selecting unit.

Also, an information communication apparatus, according to the second aspect of the invention, is featured by that in the information communication apparatus as recited in the first aspect, the address information is expressed by a URL (Universal Resource Locator) format.

Also, an information communication apparatus, according to the third aspect of the invention, is featured by that in the information communication apparatus as recited in the first aspect, the address information corresponds to an URL address expressed by a URL (Universal Resource Locator) format, or a telephone number; and the identification number includes an identification number corresponding to the address information, and an identification flag for indicating that the address information corresponds to any one of the URL address and the telephone number.

Also, an information communication apparatus, according to fourth aspect of the invention, is featured by that in the information communication apparatus as recited in the first, second or third aspect, the address managing unit includes: information storing unit for storing thereinto the address information in correspondence with the identification number; address holding unit for holding the address information used when the information acquiring unit acquires the provided information; and managing unit for supplying an identification number corresponding to address information of the address holding unit in response to a user instruction issued via the input unit so as to register both the address information and the identification number into the information storing unit, or so as to delete both the address information and the identification number from the information storing unit.

Also, an information communication apparatus, according to fifth aspect of the invention, is featured by that in the information communication apparatus as recited in the first, second or third aspect, the address information includes a group identification portion indicative of an address of a group classified by a predetermined category, and an individual information identification portion indicative of an individual address within the group; the address managing unit stores/manages the group identification portion of the address information in combination with a group identification number, and also stores/manages the individual information identification portion of the address information in combination with an individual identification number; and the address selecting unit selects one address information based upon an identification number including both a group identification number and an individual identification number, which are instructed via the input unit.

Also, an information communication apparatus, according to the sixth aspect of the invention, is featured by that in the information communication apparatus as recited in the fifth aspect, the address managing unit includes: information storing unit for storing thereinto the group identification portion of the address information in correspondence with the group identification number, and also for storing thereinto the individual information identification portion of the address information in correspondence with the individual identification number, respectively; address holding unit for holding therein the address information used when the information acquiring unit acquires the provided information; and managing unit for supplying a group identification number corresponding to the group identification portion of the address information held in the address holding unit, and an individual identification number corresponding to the individual information identification portion of the address information held in the address holding unit in response to the user instruction issued via the input unit, respectively; and for registering the address information, the group identification number, and the individual identification number into the information storing unit, or for deleting the address information, the group identification number, and the individual identification number from the information storing unit.

Also, an information communication apparatus, according to the seventh aspect of the invention, is featured by that in the information communication apparatus as recited in the sixth aspect, the address managing unit stores/manages the address information in combination with an identification number, or stores/manages both the group identification portion of the address information in combination with a group identification number, and the individual information identification portion of the address information in combination with an individual identification number, respectively; the information storing unit stores thereinto the address information in correspondence with the identification number, or stores thereinto the group identification portion of the address information in correspondence with the group identification number, and also stores thereinto the individual information identification portion of the address information in correspondence to the individual identification number, respectively; the managing unit supplies an identification number corresponding to the address information of the address holding unit in response to the user instruction issued via the input unit so as to register both the address information and the identification number into the information storing unit, or so as to delete both the address information and the identification number from the information storing unit; otherwise, the managing unit supplies the group identification number corresponding to the group identification portion of the address information held in the address holding unit, and the individual identification number corresponding to the individual information identification portion of the address information held in the address holding unit in response to the user instruction issued via the input unit, respectively so as to register the address information, the group identification number, and the individual identification number into the information storing unit, or so as to delete the address information, the group identification number, and the individual identification number from the information storing unit; and the address selecting unit selects one address information based upon either the identification number instructed via the input unit or the identification number including both the group identification number and the individual identification number.

Also, an information communication apparatus, according to the eighth aspect of the invention, is featured by that in the information communication apparatus as recited in the fourth, fifth, sixth or seventh aspect, the information communication apparatus includes an information providing apparatus connected thereto via a network, and a portable information terminal; the information providing apparatus is comprised of: information providing unit for providing the provided information in response to a request issued from the portable information terminal; information providing-sided storage unit for storing thereinto the address information used to specify the provided information every the portable information terminal; and address information providing unit for providing to the portable information terminal, the address information used to specify the provided information stored in the information providing-sided storage unit; the portable information terminal is comprised of: the address managing unit including both the address holding unit and the managing unit, the input unit, the address selecting unit, and the information acquiring unit; and temporary storing unit for temporarily storing the address information provided by the address information providing unit of the information providing apparatus; the address managing unit sequentially stores the address information of the temporary storing unit into the address holding unit; and the managing unit supplies an identification number corresponding to address information of the address holding unit in response to the user instruction via the input unit so as to register both the address information and the identification number; or the managing unit supplies a group identification number corresponding to the group identification portion of the address information held in the address holding unit, and an individual identification number corresponding to the individual information identification portion of the address information held in the address holding unit in response to the user instruction issued via the input unit, respectively so as to register the address information, the group identification number, and the individual identification number into the information storing unit.

Further, an information communication method, according to the ninth aspect of the invention, is featured by such an information communication method of an information communication apparatus for specifying provided information which is owned by an information providing apparatus connected via a network by designating address information to thereby acquire the specified provided information, comprising: an address managing step of storing/managing the address information in combination with an identification number; an input step of accepting an instruction issued from a user; an address selecting step of selecting one address information based upon an identification number instructed via the input step; and an in formation acquiring step of acquiring the provided information via the network, which is specified based upon the address information selected by the address selecting step.

Also, an information communication method, according to the tenth aspect of the invention, is featured by that in the information communication method as recited in the ninth aspect, the address information is expressed by a URL (Universal Resource Locator) format.

Also, an information communication method, according to the eleventh aspect of the invention, is featured by that in the information communication method as recited in the ninth aspect, the address information corresponds to an URL address expressed by a URL (Universal Resource Locator) format, or a telephone number; and the identification number includes an identification number corresponding to the address information,and an identification flag for indicating that the address information corresponds to any one of the URL address and the telephone number.

Also, an information communication method, according to the twelfth aspect of the invention, is featured by that in the information communication method as recited in the ninth, tenth, or eleventh aspect, the address managing step includes: an information storing step of storing the address information into information storing unit in correspondence with the identification number; an address holding step of holding the address information used when the information acquiring step acquires the provided information; and a managing step of supplying an identification number corresponding to address information of the address holding step in response to a user instruction issued via the input step unit so as to register both the address information and the identification number into the information storing unit, or so as to delete both the address information and the identification number from the information storing unit.

Also, an information communication method, according to the thirteenth aspect of the invention, is featured by that in the information communication method as recited in the ninth, tenth, and eleventh aspect, the address information includes a group identification portion indicative of an address of a group classified by a predetermined category, and an individual information identification portion indicative of an individual address within the group; the address managing step stores/manages the group identification portion of the address information in combination with a group identification number, and also stores/manages the individual information identification portion of the address information in combination with an individual identification number; and the address selecting step selects one address information based upon an identification number including both a group identification number and an individual identification number, which are instructed via the input step.

Also, an information communication method, according to the fourteenth aspect of the invention, is featured by that in the information communication method as recited in the thirteenth aspect, the address managing step includes: an information storing step of storing the group identification portion of the address information into information storing unit in correspondence with the group identification number, and also for storing the individual information identification portion of the address information into the information storing unit in correspondence with the individual identification number, respectively; an address holding step of holding therein the address information used when the information acquiring step acquires the provided information; and a managing step of supplying a group identification number corresponding to the group identification portion of the address information of the address holding step, and an individual identification number corresponding to the individual information identification portion of the address information of the address holding step in response to the user instruction issued via the input step, respectively; and for registering the address information, the group identification number, and the individual identification number into the information storing unit, or for deleting the address information, the group identification number, and the individual identification number from the information storing unit.

Also, an information communication method, according to the fifteenth aspect of the invention, is featured by that in the information communication method as recited in the fourteenth aspect, the address managing step stores/manages the address information in combination with an identification number, or stores/manages both the group identification portion of the address information in combination with a group identification number, and the individual information identification portion of the address information in combination with an individual identification number, respectively; the information storing step stores the address information into the information storing unit in correspondence with the identification number, or stores the group identification portion of the address information into the information storing unit in correspondence with the group identification number, and also stores thereinto the individual information identification portion of the address information in correspondence to the individual identification number, respectively; the managing step supplies an identification number corresponding to the address information of the address holding step in response to the user instruction issued via the input step so as to register both the address information and the identification number into the information storing unit, or so as to delete both the address information and the identification number from the information storing unit; otherwise, the managing step supplies the group identification number corresponding to the group identification portion of the address information of the address holding step, and the individual identification number corresponding to the individual information identification portion of the address information of the address holding step in response to the user instruction issued via the input step, respectively so as to register the address information, the group identification number, and the individual identification number into the information storing unit, or so as to delete the address information, the group identification number, and the individual identification number from the information storing unit; and the address selecting step selects one address information based upon either the identification number instructed via the input step or the identification number including both the group identification number and the individual identification number.

Also, an information communication method, according to the sixteenth aspect, is featured by that in the information communication method as recited in twelfth, thirteenth, fourteenth or fifteenth aspect, the information communication apparatus includes an information providing apparatus connected thereto via a network, and a portable information terminal; the information providing apparatus includes: an information providing step of providing the provided information in response to a request issued from the portable information terminal; an information providing-sided storage step of storing thereinto the address information used to specify the provided information every the portable information terminal; and an address information providing step of providing to the portable information terminal, the address information used to specify the provided information stored in the information providing-sided storage step; the portable information terminal includes: the address managing step having both the address holding step and the managing step, the input step, the address selecting step, and the information acquiring step; and a temporary storing step of temporarily storing the address information provided by the address information providing step of the information providing apparatus; the address managing step sequentially stores the address information of the temporary storing step into the address holding step; and the managing step supplies an identification number corresponding to address information of the address holding step in response to the user instruction via the input step so as to register both the address information and the identification number; or the managing step supplies a group identification number corresponding to the group identification portion of the address information of the address holding step, and an individual identification number corresponding to the individual information identification portion of the address information of the address holding step in response to the user instruction issued via the input step, respectively so as to register the address information, the group identification number, and the individual identification number into the information storing step.

Furthermore, a computer readable recording medium, according to the seventeenth aspect, is featured by such an information communication method as recited in the ninth, tenth, eleventh, twelfth, thirteenth, fourteenth, fifteenth or sixteenth aspect is recorded thereon as a program capable of executing the information communication method by a computer .

In the information communication apparatus according to the first aspect of the present invention, the information communication method according to the ninth aspect of the invention, and also the recording medium according to the seventeenth aspect of the invention, as to the information communication apparatus for specifying the provided information which is owned by the information providing apparatus connected via the network by designating the address information to thereby acquire the specified provided information, the address managing unit (address managing step) stores/manages the address information in combination with the identification number; the input unit (input step) accepts the instruction issued from the user; the address selecting unit (address selecting step) selects one address information based upon an identification number instructed via the input unit; and the information acquiring unit (information acquiring step) acquires the provided information via the network, which is specified based upon the address information selected by the address selecting unit.

As previously described, since the identification number is stored/managed as, for instance, a shortened dial number which can be entered by manipulating the ten-key switch in correspondence with the address information expressed by the URL format and the like, in such a case that the provided information which is owned by the information providing apparatus connected via the network is specified by designating the address information by the information acquiring unit (information acquiring step) so as to acquire this provided information, the address of the page of the provided information (contents) which is wanted by the user may be selected by executing the shortened dialing operation few times. Thus, the desirable contents can be acquired. It should be understood that the storing/managing operations executed by the address managing unit (address managing step) involve various operations such as registration operation, deletion operation, and other edit operations with respect to both the address information and the identification number.

In the information communication apparatus according to the second aspect of the present invention, the information communication method according to the tenth aspect, and also the recording medium according to the seventeenth aspect, the address information is expressed by a URL (Universal Resource Locator) format. Also, in the information communication apparatus according to the third aspect of the present invention, the information communication method according to the eleventh aspect, and also the recording medium according to the seventeenth aspect, the address information corresponds to the URL address expressed by the URL (Universal Resource Locator) format, or the telephone number; and the identification number includes the identification number corresponding to the address information, and the identification flag for indicating that the address information corresponds to any one of the URL address and the telephone number.

While the identification number is set as, for example, a shortened dial number which may be entered by manipulating the ten-key switch, the identification number having the identification flag for indicating that the address information is equal to any one of the URL address and the telephone number is stored/managed in correspondence with the address information. As a result, when the address information is managed, the address information involving the address sort can be managed. Such a process operation which is executed after the address has been selected may be selected in response to the address sort. In the case that the provided information which is owned by the information providing apparatus connected via the network is specified by designating the address information so as to acquire this provided information, the address of the page of such provided information (contents) which is wanted by the user is selected by manipulating the shortened dialing operation few times which is commonly used to call the telephone number, so that the desirable contents can be acquired. Alternatively, the identification flag may be realized in a combined form with the shortened telephone number. Also, while the identification flag is used as an independent flag, another specific input key may be allocated. Then, the switching operation to either the URL address or the telephone number may be carried out by operating this specific input-key. Alternatively, when, the registration is made, the address managing unit may identify the address sort and may apply the identified address sort.

In the information communication apparatus according to the fourth aspect of the present invention, the information communication method according to the twelfth aspect, and also the recording medium according to the seventeenth aspect, in the address managing unit (address managing step), the address information is stored in the information storing unit in correspondence with the identification number; the address holding unit (address holding step) holds the address information used when the information acquiring unit (information acquiring step) acquires the provided information; and the managing unit (managing step) supplies an identification number corresponding to address information of the address holding unit (address holding step) in response to a user instruction issued via the input unit (input step) so as to register both the address information and the identification number into the information storing unit, or so as to delete both the address information and the identification number from the information storing unit.

As explained above, while the address information used when the information acquiring unit (information acquiring step) acquires the provided information is held by the address holding unit (address holding step) , the identification number, which corresponds to this held address information is provided. As a result, when the provision of such provided information is accepted via the network, the address information may be edited, for instance, the identification number may be registered into the information storing unit, or may be deleted from the information storing unit. Furthermore, when such a function is additionally provided with the address managing unit (address managing step), this additional function rearranges the identification number, and the address information in the order of, for example, identificationnumbers, and displays the rearranged identification number/address information. Accordingly, the address information may be more effectively edited in the address information management.

Also, the information communication apparatus according to the fifth aspect of the present invention, the information communication method according to the thirteenth aspect, and also the recording medium according to the seventeenth aspect, the address information includes the group identification portion indicative of the address of the group classified by the predetermined category, and the individual information identification portion indicative of the individual address within the group; the address managing unit (address managing step) stores/manages the group identification portion of the address information in combination with the group identification number, and also stores/manages the individual information identification portion of the address information in combination with the individual identification number; and the address selecting unit (address selecting step) selects one address information based upon the identification number including both the group identification number and the individual identification number, which are instructed via the input unit.

Also, in the information communication apparatus according to the sixth aspect of the present invention, the information communication method according to the fourteenth aspect, and also the recording medium according to the seventeenth aspect, in the address managing unit (address managing step), the group identification portion of the address information is stored in correspondence with the group identification number, and also the individual information identification portion of the address information is stored in correspondence with the individual identification number, respectively into the information storing unit; the address holding unit (address holding step) holds therein the address information used when the information acquiring unit (information acquiring step) acquires the provided information; and the managing unit (managing step) supplies a group identification number corresponding to the group identification portion of the address information held in the address holding unit (address holding step), and the individual identification number corresponding to the individual information identification portion of the address information held in the address holding unit (address holding step) in response to the user instruction issued via the input unit (input step), respectively; and registers the address information, the group identification number, and the individual identification number into the information storing unit, or deletes the address information, the group identification number, and the individual identification number from the information storing unit.

Also, in the information communication apparatus according to the seventh aspect of the present invention, the information communication method according to the fifteenth aspect, and also the recording medium according to the seventeenth aspect, in the address managing unit (address managing step), the address information is stored/managed in combination with an identification number, or the group identification portion of the address information is stored/managed in combination with the group identification number, and the individual information identification portion of the address information is stored/managed in combination with an individual identification number, respectively; in the information storing step, the address information is stored in correspondence with the identification number, or the group identification portion of the address information is stored in correspondence with the group identification number, and also the individual information identification portion of the address information is stored in correspondence to the individual identification number, respectively; the managing unit (managing step) supplies the identification number corresponding to the address information of the address holding unit (address holding step) in response to the user instruction issued via the input unit (input step) so as to register both the address information and the identification number into the information storing unit, or so as to delete both the address information and the identification number from the information storing unit; otherwise, the managing unit supplies the group identification number corresponding to the group identification portion of the address information held in the address holding unit (address holding step), and the individual identification number corresponding to the individual information identification portion of the address information held in the address holding unit (address holding step) in response to the user instruction issued via the input unit (input step), respectively so as to register the address information, the group identification number, and the individual identification number into the information storing unit, or so as to delete the address information, the group identification number, and the individual identification number from the information storing unit; and in the address selecting unit (address selecting step), one address information is selected based upon either the identification number instructed via the input unit (input step) or the identification number including both the group identification number and the individual identification number.

As explained above, since the address information is arranged by employing the group identification portion and the individual information identification portion, for instance, if the user memorizes all of the identification numbers, then this user may directly access not only to the home page, but also may directly access to the page of the sub-domain. This group identification portion indicates the address of the group which is classified by a predetermined category. The individual information identification portion represents the individual address within this group. Furthermore, as such a process operation executed when only the group identification portion is inputted, a process operation for supporting the user input may be executed, for instance, the sub-domain selection screen is displayed.

Further, in the information communication apparatus according to the eighth aspect of the present invention, the information communication method according to the sixteenth aspect, and also the recording medium according to the seventeenth aspect, the information communication apparatus is arranged by employing the information providing apparatus connected thereto via the network, and the portable information terminal; in the information providing apparatus, the information providing unit (information providing step) provides the provided information in response to the request issued from the portable information terminal; the information providing-sided storage unit (information providing-sided storage step) stores thereinto the address information used to specify the provided information every the portable information terminal; and the address information providing unit (address information providing step) provides to the portable information terminal, the address information used to specify the provided information stored in the information providing-sided storage unit; in the portable information terminal, there are provided the address managing unit (address managing step) including both the address holding unit (address holding step) and the managing unit (managing step) the input unit (input step), the address selecting unit (address selecting step), and the information acquiring unit (information acquiring step); and the temporary storing unit (temporary storing step) temporarily stores the address information provided by the address information providing unit (address information providing step) of the information providing apparatus; the address managing unit (address managing step) sequentially stores the address information of the temporary storing unit (temporary storing step) into the address holding unit (address holding step); and the managing unit (managing step) supplies an identification number corresponding to address information of the address holding unit (address holding step) in response to the user instruction via the input unit (input step) so as to register both the address information and the identification number; or the managing unit (managing step) supplies a group identification number corresponding to the group identification portion of the address information held in the address holding unit (address holding step), and an individual identification number corresponding to the individual information identification portion of the address information held in the address holding unit (address holding step) in response to the user instruction issued via the input unit (input step), respectively so as to register the address information, the group identification number, and the individual identification number into the information storing unit.

In general, since address information of provided information in the Internet and the like is stored in a storage unit provided on the side of an information providing apparatus (server) to be managed, when the address information of the provided information is required on the side of a portable information terminal, the provision of the address information is accepted from the information providing apparatus, and then is registered into an information storing unit employed on the side of the portable information terminal. Thus, the address information may be managed on the side of the portable information terminal.

### Brief Description of the Drawings

Fig. 1 is a structural diagram of an information communication apparatus (portable information terminal) according to an embodiment of the present invention;
Fig. 2 is a structural diagram for showing a general-purpose structure of a wireless communication system to which the information communication apparatus of the embodiment is applied; and
Fig. 3 is an explanatory diagram for explaining a memory map of an information storing unit.

### Detailed Description of the Preferred Embodiments

Referring now to drawings, a detailed description will be made of an information communication apparatus, an information communication method, and a recording medium according to the embodiments of the present invention. It should be understood that in the descriptions of the respective embodiments, both the information communication apparatus and the information communication method, according to the present invention, will be explained in detail. However, as to the recording medium according to the present invention, since this recording medium is such a recording medium for recording thereon a program used to execute the information communication method, an explanation thereof may be involved in the below-mentioned descriptions of the information communication method.

### (Embodiment 1)

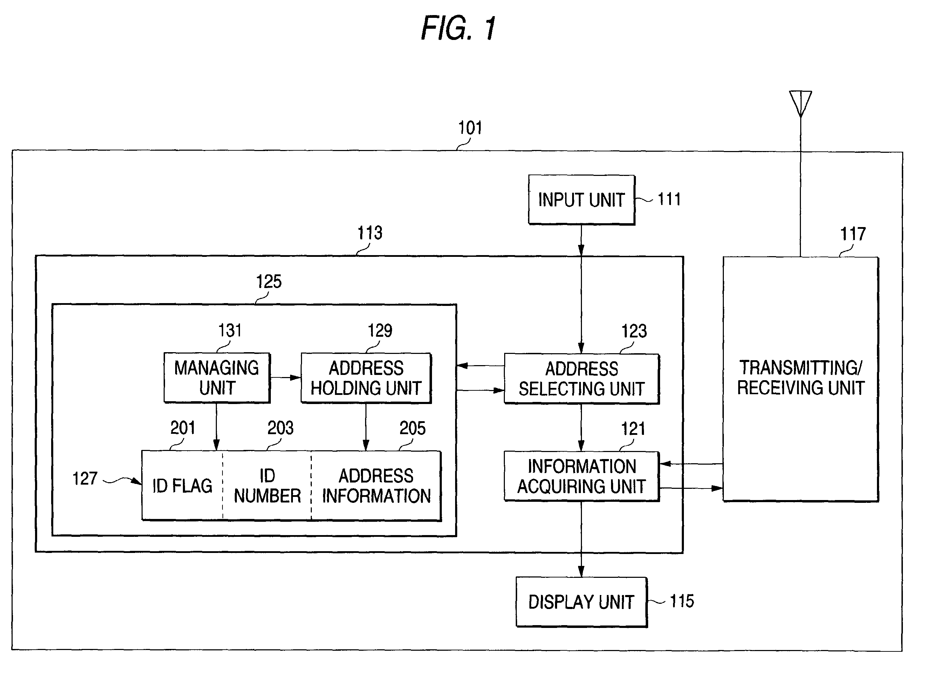

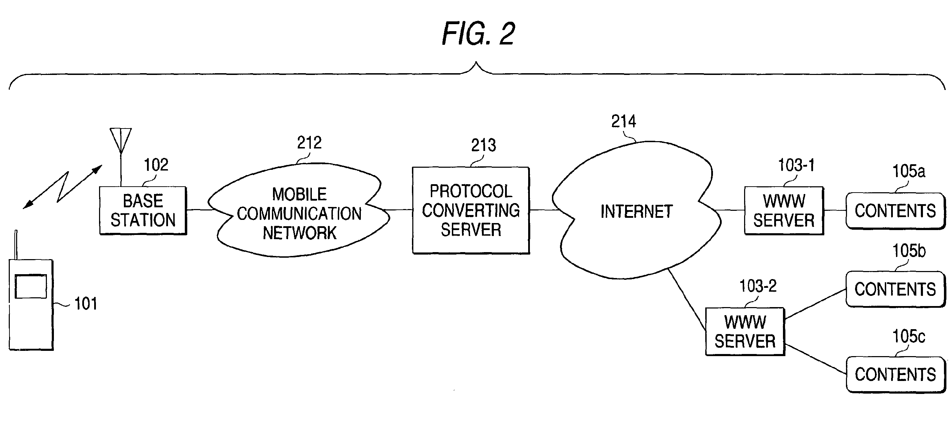

Fig. 1 is a structural diagram of an information communication apparatus according to a first embodiment of the present invention. The information communication apparatus of this embodiment, shown in this drawing, corresponds to a portable information terminal 101, and is applicable to such a wireless communication system as represented in Fig. 2. In other words, the portable information terminal 101 of the embodiment corresponds to an information communication apparatus for specifying provided information (contents) which is owned by various information providing apparatus (103-1 etc.) connected via a network by designating address information to thereby acquire the specified provided information. It should be noted that Fig. 2 corresponds to a structural diagram for showing a general-purpose structure of a wireless communication system to which the information communication apparatus 101 of the embodiment is applied.

First, the wireless communication system to which the portable information terminal 101 of this embodiment is applied will now be summarized with reference to Fig. 2.

The wireless communication system of Fig. 2 corresponds to an arrangement capable of realizing a contents providing service system. While the portable information terminal 101 is connected via a base station 102 to a mobile communication network 212, this portable information terminal 101 may be communicated to other portable information terminals, and may access to contents and the like, which have been stored in a dedicated server (exclusively used server, not shown) operated on the mobile communication network 212, and are directed to portable devices (portable electric devices).

Also, the mobile communication network 212 is connected via a protocol converting server 213 to the Internet 214, whereas WWW (World Wide Web) servers 103-1 and 103-2 are connected to this Internet 214. This WWW server 103-1 corresponds to such an "information providing apparatus" in this embodiment. In other words, in such a case that contents 105a stored in the WWW server 103-1 operable on the Internet 214 correspond to such contents directed to portable devices, the portable information terminal 101 may access to the contents 105a directed to the portable devices via both the protocol converting server 213 and the WWW server 103-1.

As a consequence, the portable information terminal 101 according to this embodiment may merely function as a voice communication apparatus, but also may function as a portable information terminal capable of performing data communications, e.g., viewing a home page and the like of the Internet 214. Therefore, as an initial condition, browsing software (browser) capable of viewing home pages is installed in this portable information terminal 101. That is to say, in the case that a user accesses to contents directed to portable devices (dedicated home pages) , an index of information services is displayed on a display screen of a display unit of the portable information terminal 101. When the user selects desirable information from this index, the portable information terminal 101 may receive and display the respective contents which are distributed to the WWW server 103-1 and the dedicated server.

It should also be noted that the wireless communication system to which the portable information terminal 101 of this embodiment applies is not limited only to the embodiment shown in Fig. 2, but also to another system. For instance, while a network corresponds to the mobile communication network 212, an information providing apparatus may correspond to the dedicated server (not shown) operable on the mobile communication network 212.

Referring back to Fig. 1, a featured arrangement of the portable information terminal 101 according to this embodiment will now be explained. In Fig. 1, the portable information terminal 101 of this embodiment is mainly arranged by employing a processing unit 113, an input unit 111 for accepting an instruction issued from a user, a display unit 115 of an LCD display panel and the like, and a transmitting/receiving unit 117 functioning as an interface with the base station 102.

In this case, the processing unit 113 further includes an address managing unit 125, an address selecting unit 123, and an information acquiring unit 121. The address managing unit 125 stores and manages address information 205 in combination with both an identification (ID) flag 201 and an identification (ID) number 203. The address selecting unit 123 selects one address information 205 based upon both the identification flag 201 and the identification number 203, which are instructed via the input unit 111. The information acquiring unit 121 acquires provided information via both the transmitting/receiving unit 117 and the network, and this provided information is specified based on the address information 205 selected by the address selecting unit 123. It should also be noted that the storing/managing operations executed by the address managing unit 125 involve various operations as to the address information 205, the identification flag 201, and the identification number 203, for example, registration operation, deletion operation, and edit operation.

Also, the address managing unit 125 includes an information storing unit 127, an address holding unit 129, and a managing unit 131. The information storing unit 127 stores thereinto the address information 205 in correspondence with both the identification flag 201 and the identification number 203. The address holding unit 129 holds such an address information 205 in the case that the information acquiring unit 121 acquires the provided information via the network. Also, while both the identification flag 201 and the identification number 203, which correspond to the address information of the address holding unit 129, are provided based upon a user instruction issued via the input unit 111, this managing unit 131 may register this address information 205, this identification flag 201 and this identification number 203 into the information storing unit 127, or may delete this address information 205, this identification flag 201, and this identification number 203 from the information storing unit 127.

In other words, in the address managing unit 125 (address managing step), the address information 205 is stored in the information storing unit 127 in correspondence with the identification flag 201 and the identification number 203 (by information storing step) . While the address information used when the information acquiring unit 121 (information acquiring step) acquires the provided information is held in the address holding unit 129 (address holding step), both the identification flag 201 and the identification number 203 corresponding to the address information of the address holding unit 123 are supplied by the managing unit 131 (managing step) based upon the user instruction issued via the input unit 111. Then, this managing unit 131 registers this address information 205, this identification flag 201, and this identification number 203 into the information storing unit 127, or deletes the address information 205, the identification flag 201, and the identification number 203 from the information storing unit 127.

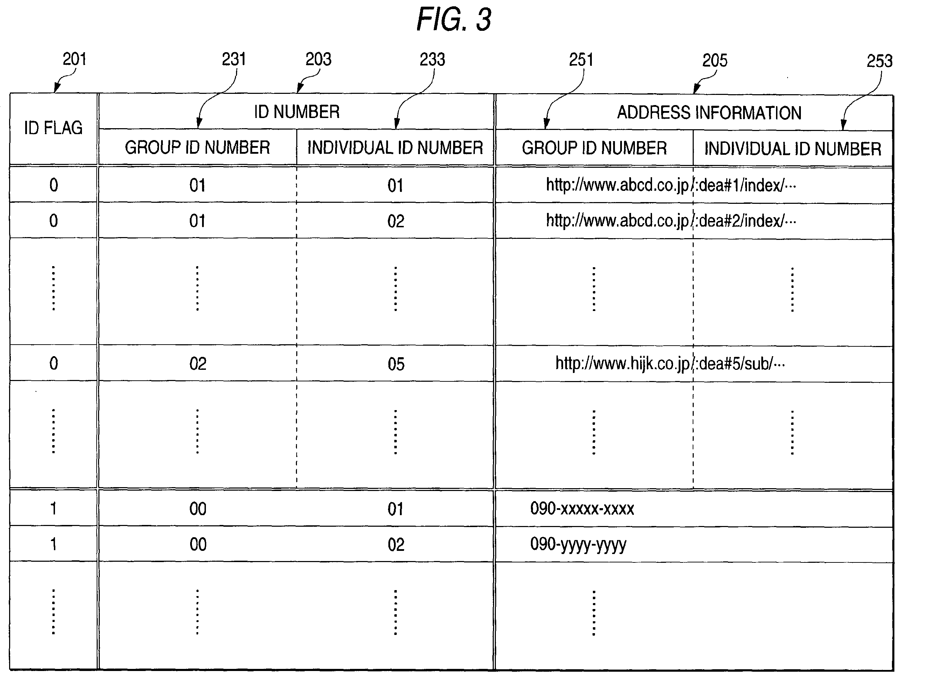

In this case, referring now to Fig. 3, a description is made of how the identification flag 201, the identification number 203, and the address information 205 are stored in the information storing unit 127. Fig. 3 is an explanatory diagram for explaining a memory map of the information storing unit 127.

As represented in Fig. 3, the identification flag 201, the identification number 203, and the address information 205 are stored in the information storing unit 127 in a table format.

In the case that the address information 205 is a telephone number, the identification flag 201 corresponds to "1", and also the address information 205 is stored in correspondence with the identification number 203 having 4 digits into the information storing unit 127.

Also, in such a case that the address information 205 is related to information (contents) provided by an information providing apparatus and is expressed in the URL format, the identification flag 201 corresponds to "0", and the address information 205 constructed of both a group identification (ID) portion 251 and an individual information identification (ID) portion 253 is stored in this information storing unit 127 in correspondence with the identification number 203 having 4 digits, which is constructed of a group identification (ID) number 231 having 2 digits and an individual identification (ID) number 233 having 2 digits.

In other words, the address information 205 expressed in the URL format is constituted by the group identification portion 251, and the individual information identification portion 253. This group identification portion 251 indicates an address of a group which is classified based upon a predetermined category. The individual information identification portion 253 indicates an individual address within a group. The address managing unit 125 stores/manages the group identification portion 251 of the address information in combination with the group identification number 231, and also stores/manages the individual information identification portion 253 of the address information in combination with the individual identification number 233. The address selecting unit 123 selects one address information 205 based upon the identification flag 201, the group identification number 231, and the individual identification number 233, which are instructed via the input unit 111.

Also, in this case, the address managing unit 125 (address managing step) stores the group identification portion 251 of the address information in correspondence with the group identification number 231, and also stores the individual information identification portion 253 of the address information in correspondence with the individual identification number 233 (by way of information storing step) into the information storing unit 127, respectively. While such an address information used when the information acquiring unit 121 (information acquiring step) acquires the provided information is saved in the address holding unit 129 (address holding step), the managing unit 131 (managing step) supplies the group identification number 231 corresponding to the group identification portion of the address information held in the address holding unit 129 (address holding step) , or supplies the individual identification number 233 corresponding to the individual information identification portion 253 of this address information in response to the user instruction issued via the input unit 111, respectively. Then, the managing unit 131 registers these supplied group identification number 231, or individual identification number 233 into the information storing unit 127, or deletes these numbers from the information storing unit 127.

Normally, address information expressed by way of a URL format is constituted by a domain name and a sub-domain name. A domain name includes information indicative of an organization name or a company name, an organization sort code, and a country sort code . Also, a sub-domain name includes information indicative of a page and the like. In the example of Fig. 3, the address information is divided under such a condition that the domain name of this address information is set as the group identification portion 251, and the sub-domain name thereof is set as the individual information identification portion 253.

As previously described, in accordance with both the information communication apparatus (portable information terminal) 101 and the information communication method of this embodiment, in such a case that the provided information which is owned by the information providing apparatus connected via the network is specified by designating the address information so as to acquire this provided information, the address managing unit 125 (address managing step) stores/manages the address information 205 in combination with the identification flag 201 and the identification number 203. Based upon both the identification flag 201 and the identification number 203, which are instructed from the user via the input unit 111 (input step), the address selecting unit 123 (address selecting step) selects one address information, and the information acquiring unit 121 (information acquiring step) acquires the provided information which is specified by this selected address information via the network.

As previously described, since both the identification flag 201 and the identification number 203 are stored/managed as, for instance, shortcut dial numbers which can be entered by manipulating the ten-key switch of the input unit 111 in correspondence with the address information 205 expressed by the URL format and the like, in such a case that the provided information which is owned by the information providing apparatus connected via the network is specified by designating the address information by the information acquiring unit 121 (information acquiring step) so as to acquire this provided information, the address of the page of the provided information (contents) which is wanted by the user may be selected by executing the shortened dialing operation few times. Thus, the desirable contents can be acquired.

Also, while the address information used when the information acquiring unit 121 (information acquiring step) acquires the provided information is held by the address holding unit 129 (address holding step), both the identification flag 201 and the identification number 203, which correspond to this held address information are provided. As a result, when the provision of such provided information is accepted via the network, the address information may be edited, for instance, the identification flag 201 and the identification number 203 may be registered into the information storing unit 127, or may be deleted from the information storing unit 127. Furthermore, if such a function is additionally provided with the address managing unit 125, then each of such address information having the same group identification portion 251 (for example, same domain name) may be classified to be displayed and edited. This additional function rearranges the identification flag 201, the identification number 203, and the address information 205 in the order of, for example, identification numbers, and displays the rearranged identification flag/number/address information. Accordingly, the address information may be more effectively edited in the address information management.

Furthermore, since the address information 205 is arranged by employing the group identification portion 251 and the individual information identification portion 253, for instance, if the user memorizes all of the identification numbers, then this user may directly access not only to the home page, but also may directly access to the page of the sub-domain. This group identification portion 251 indicates the address of the group which is classified by a predetermined category. The individual information identification portion 253 represents the individual address within this group. Furthermore, as a process operation executed when only the group identification portion is entered, such a process operation may be executed which may support an input operation by a user by displaying a selection screen of a sub-domain.

### (Embodiment 2)

In the first embodiment explained above, the portable information terminal 101 has been described as the concrete example of the information communication apparatus. In the second embodiment of the invention, in the wireless communication system indicated in Fig. 2, it is regarded as such a fact that one information communication apparatus is constituted by the portable information terminal 101 and the information providing apparatus (WWW server) 103-1.

First, in one information providing apparatus 103-1, the information providing unit (information providing step) provides the provided information in response to the request issued from the portable information terminal 101; at the information providing-sided storage step, the address information used to specify the provided information is stored into the information providing-sided storage unit every the portable information terminal 101; and the address information providing unit (address information providing step) provides to the portable information terminal 101, the address information used to specify the provided information stored in the information providing-sided storage unit.

In the other portable information terminal 101, a temporary storing unit is additionally provided with the arrangement (see Fig. 1) of the above-explained embodiment. The temporary storing unit (temporary storing step) temporarily stores thereinto the address information provided by the address information providing unit of the information providing apparatus 103-1. The address managing unit 125 (address managing step) sequentially stores the address information of the temporary storing unit into the address holding unit 129; and the managing unit 131 (managing step) supplies the identification number 203 corresponding to the address information of the address holding unit 129 in response to the user instruction via the input unit 111 (input step) so as to register both the address information 205 and the identification number 203 into the information storing unit 127.

In such a case that the address information 205 is constructed as indicated in Fig. 3, in the managing unit 131 (managing step), in response to the user instruction issued via the input unit 111, the group identification number 231 corresponding to the group identification portion 251 of the address information of the address holding unit 129 is supplied, and the individual identification number 233 corresponding to the individual information identification portion 253 of the address information of the address holding unit 129 is supplied. Then, the address information 251/253, the group identification number 231, and the individual identification number 233 are registered.

Since the address information of the provided information (contents) owned by the information providing apparatus 103-1 is stored in the storing unit employed on the side (server) of the information providing apparatus 103-1, in accordance with the information communication apparatus of this embodiment, when the address information of the provided information is required on the side of the portable information terminal 101, the address information is accepted from the information providing apparatus 103-1, and then is registered into the information storing unit 127 employed on the side of the portable information terminal 101, so that this address information may be managed.

It should also be noted that in the above-explained information communication apparatus of both embodiments, the portable information terminal 101, the portable information terminal 101 and the information providing apparatus (WWW server) 103-1 have been described as the concrete structural example. Alternatively, if any information communication apparatus is provided with a telephone function, and also a data communication function such as a facsimile and an electronic mail, then this information communication apparatus may be covered by the present invention. Therefore, the application range of the information communication apparatus, the information communication method, and the recording medium of the present invention is not limited to these apparatuses.

As previously described, in accordance with the information communication apparatus, the information communication method, and the recording medium of the present invention, in the information communication apparatus for specifying the provided information which is owned by the information providing apparatus connected via the network by designating the address information to thereby acquire the specified provided information, the address managing unit (address managing step) stores/manages the address information in combination with the identification number; the address selecting unit (address selecting step) selects one address information based upon the identification number instructed via the input unit (input step) from the user; the information acquiring unit (information acquiring step) acquires the provided information via the network, which is specified based upon the selected address information; the identification numbers are stored/managed in correspondence with the address information expressed by the URL format, for example, as the shortened dial numbers. As a consequence, in such a case that the provided information owned by the information providing apparatus connected via the network is specified by the information acquiring unit (information acquiring step) by designating the address information, such an information communication apparatus, information communication method, and recording medium can be provided by which the user can acquire the desirable contents by manipulating the shortened dial operation few times by selecting the address of the page of the desirable contents (provided information).

## Claims

1. An information communication apparatus for specifying provided information owned by an information providing apparatus connected via a network by designating address information to thereby acquire the specified provided information, comprising:
an address managing unit for storing/managing the address information in combination with an identification number;
an input unit for accepting an instruction issued from a user;
an address selecting unit for selecting one address information based upon an identification number instructed via the input unit; and
an information acquiring unit for acquiring the provided information via the network wherein the provided information is specified based upon the address information selected by the address selecting unit.

2. The information communication apparatus as claimed in claim 1, wherein the address information is expressed by a URL format.

3. The information communication apparatus as claimed in claim 1,
wherein the address information corresponds to at least one of an URL address expressed by one of a URL format and a telephone number,
wherein the identification number includes: an identification number corresponding to the address information; and an identification flag for indicating that the address information corresponds to any one of the URL address and the telephone number.

4. The information communication apparatus as claimed in claim 1, wherein the address managing unit includes:
an information storing unit for storing the address information in correspondence with the identification number;
an address holding unit for holding the address information used when the information acquiring unit acquires the provided information; and
a managing unit for supplying an identification number corresponding to address information of the address holding unit in response to a user instruction issued via the input unit so as to register/delete both the address information and the identification number into/from the information storing unit.

5. The information communication apparatus as claimed in claim 1,
wherein the address information includes: a group identification portion indicating an address of a group classified by a predetermined category; and an individual information identification portion indicating an individual address within the group,
wherein the address managing unit stores/manages the group identification portion of the address information in combination with a group identification number, and also stores/manages the individual information identification portion of the address information in combination with an individual identification number,
wherein the address selecting unit selects one address information based upon an identification number including both a group identification number and an individual identification number, which are instructed via the input unit.

6. The information communication apparatus as claimed in claim 5, wherein the address managing unit includes:
an information storing unit for storing the group identification portion of the address information in correspondence with the group identification number, and also for storing the individual information identification portion of the address information in correspondence with the individual identification number, respectively;
an address holding unit for holding the address information used when the information acquiring unit acquires the provided information; and
a managing unit for supplying a group identification number corresponding to the group identification portion of the address information held in the address holding unit, and an individual identification number corresponding to the individual information identification portion of the address information held in the address holding unit in response to the user instruction issued via the input unit, respectively; and for registering/deleting the address information, the group identification number, and the individual identification number into/from the information storing unit.

7. The information communication apparatus as claimed in claim 6,
wherein the address managing unit stores/manages the address information in combination with an identification number,
wherein the information storing unit stores the address information in correspondence with the identification number,
wherein the managing unit supplies an identification number corresponding to the address information of the address holding unit in response to the user instruction issued via the input unit so as to register/delete both the address information and the identification number into/from the information storing unit,
wherein the address selecting unit selects one address information based upon the identification number instructed via the input unit.

8. The information communication apparatus as claimed in claim 6,
wherein the address managing unit stores/manages the group identification portion of the address information in combination with a group identification number, and the individual information identification portion of the address information in combination with an individual identification number, respectively;
wherein the information storing unit stores the group identification portion of the address information in correspondence with the group identification number, and also stores the individual information identification portion of the address information in correspondence to the individual identification number, respectively;
wherein the managing unit supplies the group identification number corresponding to the group identification portion of the address information held in the address holding unit, and the individual identification number corresponding to the individual information identification portion of the address information held in the address holding unit in response to the user instruction issued via the input unit, respectively so as to register/delete the address information, the group identification number, and the individual identification number into/from the information storing unit,
wherein the address selecting unit selects one address information based upon the identification number including the group identification number and the individual identification number.

9. The information communication apparatus as claimed in claim 4, further comprising an information providing apparatus connected via a network and a portable information terminal,
wherein the information providing apparatus includes:
an information providing unit for providing the provided information in response to a request issued from the portable information terminal; an information providing storage unit for storing the address information used to specify the provided information every the portable information terminal; and
address information providing unit for providing to the portable information terminal, the address information used to specify the provided information stored in the information providing storage unit,
wherein the portable information terminal includes: the address managing unit including the address holding unit and the managing unit; the input unit; the address selecting unit; the information acquiring unit; and a temporary storing unit for temporarily storing the address information provided by the address information providing unit,
wherein the address managing unit sequentially stores the address information of the temporary storing unit into the address holding unit,
wherein the managing unit supplies an identification number corresponding to address information of the address holding unit in response to the user instruction via the input unit so as to register the address information and the identification number into the information storing unit.

10. The information communication apparatus as claimed in claim 9,
wherein the identification number corresponding to address information of the address holding unit includes an group identification number and the individual identification number,
wherein the managing unit supplies a group identification number corresponding to the group identification portion of the address information held in the address holding unit, and an individual identification number corresponding to the individual information identification portion of the address information held in the address holding unit in response to the user instruction issued via the input unit, respectively so that the address information, the group identification number, and the individual identificationnumber are registered into the information storing unit.

11. An information communication method of an information communication method for specifying provided information which is owned by an information providing apparatus connected via a network by designating address information to thereby acquire the specified provided information, comprising:
an address managing step of storing/managing the address information in combination with an identification number;
an input step of accepting an instruction issued from a user;
an address selecting step of selecting one address information based upon an identification number instructed via the input step; and
an information acquiring step of acquiring the provided information via the network, which is specified based upon the address information selected by the address selecting step.

12. The information communication method as claimed in claim 11, wherein the address information is expressed by a URL format.

13. The information communication method as claimed in claim 11,
wherein the address information corresponds to one of an URL address expressed by a URL format, and a telephone number,
wherein the identification number include an identification number corresponding to the address information, and an identification flag for indicating that the address information corresponds to any one of the URL address and the telephone number.

14. An information communication method as claimed in claim 11 wherein the address managing step includes:
an information storing step of storing the address information into information storing unit in correspondence with the identification number;
an address holding step of holding the address information used when the information acquiring step acquires the provided information; and
a managing step of supplying an identification number corresponding to address information of the address holding step in response to a user instruction issued via the input step so as to register/delete both the address information and the identification number into/from the information storing unit, or so as to delete both the address information and the identification number from the information storing unit.

15. An information communication method as claimed in claim 11,
wherein the address information includes a group identification portion indicative of an address of a group classified by a predetermined category, and an individual information identification portion indicative of an individual address within the group,
wherein the address managing step stores/manages the group identification portion of the address information in combination with a group identification number, and also stores/manages the individual information identification portion of the address information in combination with an individual identification number,
wherein the address selecting step selects one address information based upon an identification number including a group identification number and an individual identification number, which are instructed via the input step.

16. An information communication method as claimed in claim 15 wherein the address managing step includes:
an information storing step of storing the group identification portion of the address information into information storing unit in correspondence with the group identification number, and also for storing the individual information identification portion of the address information into the information storing unit in correspondence with the individual identification number, respectively;
an address holding step of holding therein the address information used when the information acquiring step acquires the provided information; and
a managing step of supplying a group identification number corresponding to the group identificationportion of the address information of the address holding step, and an individual identification number corresponding to the individual information identification portion of the address information of the address holding step in response to the user instruction issued via the input step, respectively; and of registering/deleting the address information, the group identification number, and the individual identification number into/from the information storing unit.

17. An information communication method as claimed in claim 14,
wherein the address managing step stores/manages the address information in combination with an identification number,
wherein the information storing step stores the address information into the information storing unit in correspondence with the identification number,
wherein the managing step supplies an identification number corresponding to the address information of the address holding step in response to the user instruction issued via the input step so as to register/delete both the address information and the identification number into/from the information storing unit,
the address selecting step selects one address information based upon the identification number instructed via the input step.

18. An information communication method as claimed in claim 14,
wherein the address managing step stores/manages both the group identification portion of the address information in combination with a group identification number, and the individual information identification portion of the address information in combination with an individual identification number, respectively,
wherein the information storing step stores the group identification portion of the address information into the information storing unit in correspondence with the group identification number, and also stores the individual information identification portion of the address information in correspondence to the individual identification number, respectively,
wherein the managing step supplies the group identification number corresponding to the group identification portion of the address information of the address holding step, and the individual identification number corresponding to the individual information identification portion of the address information of the address holding step in response to the user instruction issued via the input step, respectively so as to register/delete the address information, the group identification number, and the individual identification number into/from the information storing unit,
wherein the address selecting step selects one address information based upon the identification number including the group identification number and the individual identification number.

19. An information communication method as claimed in claim 14,
wherein the information communication apparatus includes an information providing apparatus connected thereto via a network, and a portable information terminal,
wherein the information providing apparatus performs: an information providing step of providing the provided information in response to a request issued from the portable information terminal; an information providing storage step of storing the address information used to specify the provided information the portable information terminal; and an address information providing step of providing to the portable information terminal, the address information used to specify the provided information stored in the information providing storage step,
wherein the portable information terminal performs: the address managing step having the address holding step and the managing step; the input step; the address selecting step; the information acquiring step; and a temporary storing step of temporarily storing the address information provided by the address information providing step of the information providing apparatus,
wherein the address managing step sequentially stores the address information of the temporary storing step into the address holding step; and
wherein the managing step supplies an identification number corresponding to address information of the address holding step in response to the user instruction via the input step so as to register the address information and the identification number into the information storage unit.

20. The information communication method as claimed in claim 19,
wherein the identification number corresponding to address information of the address holding step includes an group identification number and the individual identification number,
wherein the managing step supplies a group identification number corresponding to the group identification portion of the address information of the address holding step, and an individual identification number corresponding to the individual information identification portion of the address information of the address holding step in response to the user instruction issued via the input step, respectively so as to register the address information, the group identification number, and the individual identification number into the information storing unit.

21. A computer readable recording medium for recording the information communication method as a program to allow a computer executing the information communication method, wherein the information communication method comprising:
an address managing step of storing/managing the address information in combination with an identification number;
an input step of accepting an instruction issued from a user;
an address selecting step of selecting one address information based upon an identification number instructed via the input step; and
an information acquiring step of acquiring the provided information via the network, which is specified based upon the address information selected by the address selecting step.
